(19) **Europäisches Patentamt European Patent Office Office européen des brevets**

(11) **EP 4 269 970 B1**

(12) **EUROPEAN PATENT SPECIFICATION**

(45) Date of publication and mention of the grant of the patent:
**20.08.2025 Bulletin 2025/34**

(21) Application number: **22386022.2**

(22) Date of filing: **29.04.2022**

(51) International Patent Classification (IPC):
**G01K 17/00** *(2006.01)* **G01M 99/00** *(2011.01)*

(52) Cooperative Patent Classification (CPC):
**G01M 99/002; G01K 17/00**

(54) **METHOD AND APPARATUS FOR MONITORING THERMAL LOAD**

VERFAHREN UND VORRICHTUNG ZUR ÜBERWACHUNG VON THERMISCHER BELASTUNG

PROCÉDÉ ET APPAREIL DE SURVEILLANCE DE CHARGE THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.11.2023 Bulletin 2023/44**

(73) Proprietor: **ABB SCHWEIZ AG**
**5400 Baden (CH)**

(72) Inventors:
• **Kakosimos, Panagiotis**
  **72358 Västerås (SE)**
• **Alkkiomäki, Olli**
  **00380 Helsinki (FI)**

(74) Representative: **Kolster Oy Ab**
**Salmisaarenaukio 1**
**P.O. Box 204**
**00181 Helsinki (FI)**

(56) References cited:
**WO-A1-2021/012887      GB-A- 2 603 053**

## Description

FIELD

The present invention relates to monitoring a thermal load, and more particularly to monitoring a thermal load in an enclosure comprising at least one electric device.

BACKGROUND

An enclosure, such as a housing or a room, may contain one or more heat sources, such as electric machines, drives and/or other devices, operating at the same or totally different power cycles, for example. The enclosure may experience temperature increases and swings during the system operation based on its characteristics, such as air volume, materials, cooling, for example. The established temperature may be generally determined by the enclosure's capability of storing and dissipating excess of heat to the ambient, whereas the heat injected by the equipment inside the enclosure constitutes the third term in the energy balance.

As an example, when an electric powertrain is placed inside an enclosure, the power losses of the electric powertrain increase the air temperature inside the enclosure. The combination of the injected loss amount and enclosure properties, such as size and materials used, may be determinant for avoiding an excess temperature increase in the enclosure. The thermal load of such an enclosed powertrain may be a critical factor that can stress the enclosure. Additionally, altering the injected heat may be one of the possible ways of mitigating high temperature effects, especially if considering that there may be no direct control on the enclosure cooling performance, for example. Therefore, it would be desirable to assess the enclosure suitability for each powertrain component and its power cycle, for instance. Moreover, as an enclosure may contain several devices that dissipate heat. Understanding which device or combinations of devices has an adverse effect on the enclosure is thus not straightforward.

A problem related to the above is that identifying whether a thermal load caused by one or more devices in an enclosure can cause an excess of heat in the enclosure may be difficult.

Document WO 2021/012887 A1 discloses a heat dissipation quantity measuring method for an electromechanical device. The method comprises: S1, establishing a measuring device; S2, obtaining measurement data: by the use of measuring elements, a mass flow rate m corresponding to each cooling medium flowing through a box body is measured, the temperature of a liquid inlet is measured to be T1 and the temperature of a liquid outlet is measured to be T2, the temperature of a gas inlet is measured to be T3 and the temperature of a gas outlet is measured to be T4, the temperature of an inner wall surface of the box body is measured to be T5 and the temperature of an outer wall surface of the box body is measured to be T6, the total area of inner walls of the box body is measured to be A, and the wall thickness of the box body is measured to be L; and S3, heat dissipation quantity calculation: a heat dissipation quantity Q is finally calculated and obtained.

BRIEF DESCRIPTION

An object of the present invention is thus to provide a method and an apparatus for implementing the method so as to overcome the above problem or at least to alleviate the above problem. The objects of the invention are achieved by a method and an apparatus which are characterized by what is stated in the independent claims. The preferred embodiments of the invention are disclosed in the dependent claims.

The invention is based on the idea of associating data indicative of the heat generated by the at least one electric device into the enclosure with data of the temperature in the enclosure; and determining the thermal load caused by the at least one electric device in the enclosure on the basis of the associated data.

An advantage of the solution of the invention is that it enables the thermal load in the enclosure to be monitored, which monitoring makes it possible to identify if the thermal load of one or more devices causes an excess of heat in the enclosure.

BRIEF DESCRIPTION OF THE DRAWINGS

In the following exemplary embodiments will be described in greater detail with reference to the accompanying drawings, in which:

Figure 1 illustrates a block diagram of an exemplary system;
Figure 2 illustrates an example according to an embodiment; and
Figure 3 illustrates a flow chart according to an embodiment.

DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or configuration of the various elements, and generally their implementation, could vary from the examples shown in the figures.

Different embodiments and examples may be described below using single units, models, equipment and memory, without restricting the embodiments/examples to such a solution. Concepts called cloud computing and/or virtualization may be used. The virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In possible cloud computing network devices, computing devices and/or storage devices may provide shared resources. Some other technology advancements, such as Software-Defined Networking (SDN), may cause one or more of the functionalities described below to be migrated to any corresponding abstraction or apparatus or device. Therefore, all words and expressions should be interpreted broadly, and they are intended to illustrate, not to restrict, the embodiment in question.

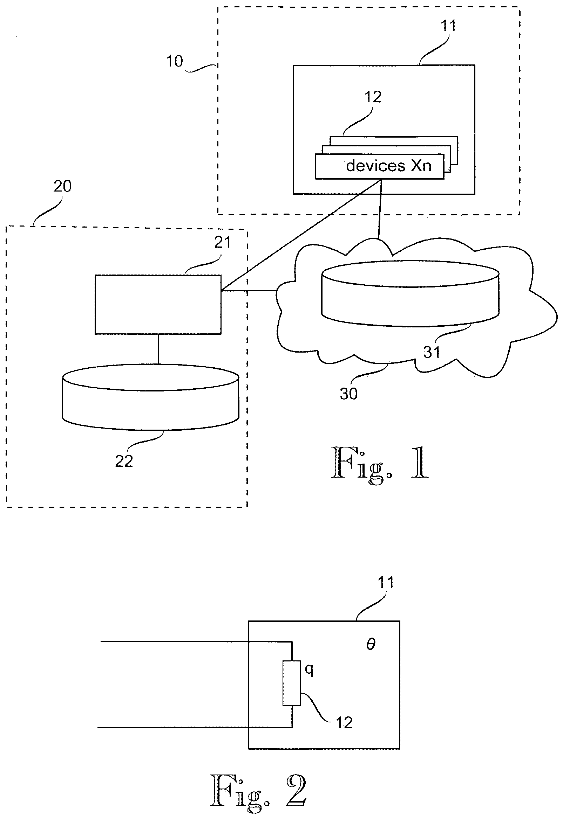

Figure 1 is a simplified block diagram of an exemplary system showing some equipment (e.g. apparatuses, devices, nodes) and functional entities, whose implementation and/or number and/or configuration may differ from what is shown in the example of Figure 1. The connections shown in Figure 1 are logical connections and corresponding actual physical connections could be different. Such a system may also comprise other equipment, functional entities and/or structures, some of which used in or for big data, data management, and communication in the system or in any part of the system, for example. Also e.g. any communications protocols used may vary and may depend on the system characteristics, for instance.

The exemplary system of Figure 1 comprises an enclosure 11 and one or more electric devices Xn 12 located within the enclosure. The one or more electric devices 12 located within the enclosure 11 may be located at an industrial site 10 or another site, for example. A non-limiting list of examples of such industrial sites includes power plants, manufacturing plants, chemical processing plants, power transmission systems, mining and mineral processing plants, oil and gas systems, data centres, ships and other vehicles, transportation fleet systems and utility plants. The exemplary system of Figure 1 further comprises a monitoring arrangement (e.g. apparatus, device, unit) 21 configured for monitoring the one or more electric devices 12. At least part of the functionality of the various embodiments described herein may be implemented with the exemplary monitoring arrangement 21. The monitoring arrangement 21 may be located at the same site 10 as the one or more electric devices 12 or at another site 20, such as a remote site. The monitoring arrangement 21 could also be located within one or more electric devices 12 or otherwise within or in connection with the enclosure 11. The exemplary system of Figure 1 further comprises a data storage 22 in connection with the monitoring arrangement 21. Such a data storage 22 could be also included within the monitoring arrangement 21. The exemplary system of Figure 1 further comprises a cloud platform 30 with a data storage 31, such as a shared database. The data storages 22, 31 may be any kind of conventional or future data repositories, including distributed and centralized storing of data, managed by any suitable management system, for example. The actual implementation of the data storages 22, 31, e.g. the manner how data is stored, retrieved and updated, and details of how the data storage is interfaced, and the location where the data is stored are irrelevant to the invention. The monitoring arrangement 21 may be configured to use at least one of the data storages 22, 31 for storing (recording) data therein and for retrieving stored (recorded) data therefrom.

The one or more electric devices 12 may be industrial devices that may be configured to collect various process data, such as temperature data, and to transfer (transmit) it to the shared database 31 within the cloud platform 30 and/or directly to the monitoring arrangement 21, for example. It is alternatively or additionally possible that a separate measuring arrangement (not shown separately) is provided in connection with the enclosure 11 for measuring and transferring e.g. temperature data from the enclosure 11. As an example, the enclosure 11 could comprise one or more temperature sensors configured to measure temperature inside the enclosure 11 and to transmit the temperature data to the monitoring arrangement 21 and/or the cloud platform 30.

Such an industrial device may be an industrial automation device, for example. An industrial automation device generally refers to electronic equipment that may be used for controlling one or more industrial processes. For example, industrial automation devices may control the position, speed, torque and/or direction of electric motors in conveyors, grinders, winders, pumps and/or fans or other devices. The industrial automation device may control the speed and/or torque of a motor by changing the frequency, current and/or voltage of the electrical supply to the motor, for example. Naturally, a motor itself, or a generator or another electric machine, is an example of an industrial device. A non-limiting list of examples of industrial automation devices includes electric drives and components thereof, frequency converters, AC/DC converters, DC/AC converters, DC/DC converters, electric powertrains and components thereof, programmable logic controllers, switches, motion controllers or motion drives, servo motors, soft starters, wind turbines, solar inverters, and any combinations thereof and other possible devices.

The enclosure 11 may be of any type and size, and may be a housing of or for one or more electric devices 12 or a room or generally any enclosed space within which the at least one electric device 12 may be located. Such an enclosure 11 may be a sealed (closed) enclosure, such as a hermetically sealed enclosure, or an unsealed enclosure, for instance. The enclosure 11 may be at least partially filled with air, and/or another gas, and/or with liquid, such as coolant liquid. Figure 2 shows an example of an enclosure 11 with one electric device 12 therein. In the simplified illustration of Figure 2, the electric device 12 has been depicted as a resistor producing heat q inside the enclosure 11 and the enclosure 11 inside temperature, e.g. air temperature, is $\theta$.

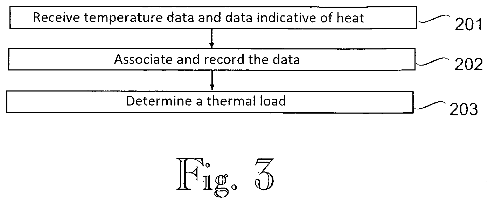

Figure 3 illustrates a flow chart according to an embodiment. According to the invention, a method for monitoring a thermal load in an enclosure 11 comprising at least one electric device 12 comprises receiving 201 temperature data on a temperature $\theta$ inside the enclosure 11 and data indicative of heat q generated by the at least one electric device 12 into the enclosure 11. The method further comprises associating and recording 202 the data indicative of the heat q generated by the at least one electric device 12 into the enclosure 11 with the temperature data over at least one period of time, and determining 203 a thermal load caused by the at least one electric device 12 in the enclosure 11 on the basis of the data recorded over said at least one period of time. According to an embodiment, the associating and recording 202 of the data indicative of the heat generated by the at least one electric device into the enclosure with the temperature data over at least one period of time may be performed for two or more periods of time occurring during one power cycle of the at least one electric device 12, and the determining 203 of the thermal load caused by the at least one electric device 12 in the enclosure 11 may then be performed on the basis of the data recorded over said two or more periods of time.

Thus, the required inputs are the temperature $\theta$ inside the enclosure 11, e.g. air temperature around the at least one electric device 12 inside the enclosure 11, and some information about the heat injected by the at least one electric device 12 into the enclosure 11. According to the invention, the data indicative of the heat q generated by the at least one electric device 12 into the enclosure 11 comprises data on a power loss or an estimated power loss of the at least one electric device 12 and/or data on an energy loss or an estimated energy loss of the at least one electric device 12. The temperature $\theta$ may be readily recorded by many electric devices 12, whereas the operating conditions may be used for estimating the generated heat. For example, the losses or estimated losses, if known, or the active power or current of the at least one electric device 12 may be used for estimating the generated heat q. Generally, when the at least one electric device 12 operates, a certain amount of heat q is dissipated into the enclosure 11. The enclosure 11 temperature $\theta$, e.g. inside-air temperature, and the injected heat q may be monitored, and the injected heat may be associated with the corresponding temperature. Thus, any variation of the temperature $\theta$, e.g. temperature difference and/or temperature change rate, that electric device 12 causes, and thus the thermal load caused by the at least one electric device 12 in the enclosure 11 may be determined. According to an embodiment, the determining 203 of the thermal load caused by the at least one electric device 12 in the enclosure 11 may comprise determining, on the basis of the data recorded over said at least one period of time, whether the heat q generated by the at least one electric device 12 into the enclosure 11 caused a variation of the temperature $\theta$. In other words, any variation of the temperature $\theta$ may be associated with the amount of heat q generated by the at least one electric device 12. Then it is possible to determine the thermal load caused by the at least one electric device 12 in the enclosure 11. In the following, some more specific embodiments of the determining 203 of the thermal load according to the invention are given. It should be noted, however, that the interpretation of the determined relationship of the heat q generated by the at least one electric device 12 into the enclosure 11 and the possible variation of the temperature $\theta$ caused by it may depend on the characteristics of the system being observed, such as the characteristics of the enclosure 11, e.g. the material and/or cooling thereof, and the characteristics and number of the electric device(s) 12 in question, for instance.

According to an embodiment of the invention, the determining 203 of the thermal load caused by the at least one electric device 12 in the enclosure 11 comprises determining, in response to a determined temperature difference over said at least one period of time inside the enclosure 11 being essentially zero and a determined variation of the power loss or estimated power loss of the at least one electric device 12 during said at least one period of time being essentially zero, that a thermal equilibrium exists in the enclosure 11. In other words, when the temperature difference inside the enclosure 11 occurring over the at least one period of time is essentially zero and the variation of the power loss or estimated power loss of the at least one electric device 12 during the at least one period of time is essentially zero, it can be concluded that the system including the enclosure 11 and the at least one electric device 12 in the enclosure 11 is in a thermal equilibrium. According to an embodiment of the invention, additionally or alternatively, the determining 203 of the thermal load caused by the at least one electric device 12 in the enclosure 11 comprises determining, in response to the determined temperature difference over said at least one period of time inside the enclosure 11 being essentially zero and the determined variation of the power loss or estimated power loss of the at least one electric device 12 during said at least one period of time being greater than zero, that the thermal load caused by the at least one electric device 12 in the enclosure 11 is negligible. Thus, when the temperature difference inside the enclosure 11 occurring over the at least one period of time is essentially zero and the determined variation of the power loss or estimated power loss of the at least one electric device 12 during the at least one period of time is greater than zero, it is concluded that the at least one electric device 12 does not cause any significant thermal load in the enclosure 11. According to an embodiment of the invention, additionally or alternatively, the determining 203 of the thermal load caused by the at least one electric device 12 in the enclosure 11 comprises determining, in response to the determined temperature difference over said at least one period of time inside the enclosure 11 being greater than zero and a determined energy loss or an estimated energy loss of the at least one electric device 12 over said at least one period of time being greater than zero, that the at least one electric device 12 may have contributed to said temperature difference becoming greater than zero. Thus, when the determined temperature difference inside the enclosure 11 occurring over the at least one period of time is greater than zero and the energy loss or an estimated energy loss of the at least one electric device 12, based on e.g. the power loss or estimated power loss of the at least one electric device, over said at least one period of time is greater than zero, it is concluded that the at least one electric device 12 causes a thermal load of significance in the enclosure 11. The determining 203 of the thermal load caused by the at least one electric device 12 in the enclosure 11 on the basis of the data recorded over said at least one period of time may also be implemented in different ways in addition to the embodiments above depending on the characteristics of the system in question, for example.

According to an embodiment, control data may be sent to the at least one electric device 12 on the basis of the determining 203 of the thermal load caused by the at least one electric device 12 in the enclosure 11. As an example, if it is determined 203, that the at least one electric device 12 may have contributed to said temperature difference becoming greater than zero, or generally causes or may cause a significant thermal load in the enclosure 11, the at least one electric device 12 may be controlled suitably to reduce or prevent the thermal load caused by the at least one electric device 12 in the enclosure 11. Additionally, or alternatively, any other measures may be taken on the basis of the result of the determining 203 of the thermal load caused by the at least one electric device 12 in the enclosure 11. According to an embodiment, additionally or alternatively, the determined thermal load caused by the at least one electric device 12 in the enclosure 11 may also be output, e.g. displayed, to an operator or user, or transmitted to a further system or entity.

According to an embodiment, the receiving 201, and associating and recording 202 may be carried out according to the following example. It should be noted that the steps in the following example could be modified, one of more steps could be omitted, and/or further steps could be added. Thus, the following example is provided merely to illustrate some possible embodiments and not to restrict the invention to all the specific features included in the example. In the example the following notation is used: an enclosure 11 air temperature is $\theta$, power losses

are $P_{loss}$, and may be determined by multiplying an output power of the electric device 12 with an estimated efficiency of the electric device or any other suitable way.

STEP 1: Record the temperature $\theta$, time t, power losses $P_{loss}$, and calculate the temperature change rate $\frac{d\theta}{dt}$.

STEP 2: If the temperature change rate is zero $\left(\frac{d\theta}{dt} \approx 0\right)$, proceed to STEP 3; otherwise, go to STEP 1.

STEP 3: If there is an increase in the power losses $\left(\frac{dP_{loss}}{dt} > 0\right)$ [or a trigger has been set to high], store the temperature $\theta_0$, time $t_0$, and initialize a counter.

STEP 4: While either $\frac{d\theta}{dt} > 0$ or the counter is less than a limit, repeat the following substeps A-D; otherwise, go to STEP 5.

> STEP A: Record the temperature $\theta_x$, power losses $P_{loss}$, and time $t_x$.
> STEP B: Calculate temperature difference $\Delta\theta(= \theta_x -\theta_0)$, elapsed time $\Delta t(= t_x -t_0)$, and optionally the energy losses $W_{loss}\left(= \int_{t_0}^{t_x} P_{loss}dt\right)$.
> [STEP C: If the trigger is high and the power losses vary $\left(\frac{dP_{loss}}{dt} \neq 0\right)$, set the trigger to low and exit out of the loop.] STEP D: Increase the counter and go to STEP 4.

STEP 5: Store the event that caused the routine execution, the power losses $P_{loss}$, and/or energy losses $W_{loss}$ (if determined in step B), the temperature difference $\Delta\theta$, and the elapsed time $\Delta t$, as they have been found at the final iteration of STEP 4.

The previous steps 1-5, including substeps A-D, may then be followed to track the evolution of any heat dissipation event by a thermal load while the temperature varies or a counter is active. The purpose of the counter in the example above is to compensate a thermal inertia of the system in dynamic conditions, whereas, it can define a time window in trigger-based events under steady-state conditions (applies to optional features; text in square brackets [...] in the example above). Also, the exemplary routine formed by steps 1-5, including substeps A-D, may be configured to start only when the temperature change rate is zero or essentially zero $\left(\frac{d\theta}{dt} \approx 0\right)$, for example, to avoid confusing thermal events caused by other reasons.

With the above exemplary routine formed by steps 1-5, and substeps A-D, it is thus possible to record and associate power, $P_{loss}$, and/or energy, $W_{loss}$, losses with temperature variations, $\Delta\theta$, e.g. until the maximum temperature is reached. After collecting the data, the interpretation of the data may be realized in an automatic fashion, e.g., by using regression analysis, machine learning, or in any other suitable way. The exemplary routine may consider the whole power cycle by summing the stored results of STEP 5, cumulatively. Generally, the data collection at STEP 5 under different operating conditions and/or during the system operations may allow to interpret more complex phenomena by using data analytics approaches, for instance. Based on the results of the exemplary routine execution, some examples about the recorded data interpretation are given here, whereas the possible parameters of interest are in brackets.

- According to an embodiment, if the temperature difference remains essentially around zero ($\Delta\theta \approx 0$) and the power losses do not vary $\left(\frac{dP_{loss}}{dt} \approx 0\right)$, then the system is in thermal equilibrium ($P_{loss}$, $\theta$, steady state, trigger-based).
- According to an embodiment, if the temperature difference remains essentially around zero ($\Delta\theta \approx 0$) and the power losses vary $\left(\frac{dP_{loss}}{dt} > 0\right)$, then the electric device has negligible impact on the temperature ($W_{loss}$, $\theta$, dynamic state, event-based, counter function).
- According to an embodiment, if the temperature difference and energy losses are greater than zero ($\Delta\theta > 0$ and $W_{loss} > 0$), then the component may have contributed to the temperature increase ($W_{loss}$, $\Delta\theta$, dynamic state, event-based).

According to an embodiment, any type and number of electric devices as heat sources or even thermal masses may be monitored because the superposition principle holds for heat transfer problems, for instance. According to an embodiment, an execution of the exemplary routine may be essentially continuous and/or it can be triggered based on e.g. monitoring needs, such as criticality of an application, variation of the parameters, etc., and/or any other trigger possibly depending on the characteristics of the system in question. According to an embodiment, while a precise estimation of the injected losses, and consequently the heat q, may bring additional value and may thus be preferable, any other suitable parameters may be employed for that purpose either alternatively or in addition, such as temperature difference between an internal point and the enclosure air. Any term or quantity that remains proportional to the injected losses, and consequently the heat q, may also be used.

The monitoring arrangement 21 or other means for implementing at least part of the functionality according to any one of the embodiments herein, or a combination thereof, may be implemented as one physical unit or as two or more separate physical units that are configured to implement the functionality. Herein the term 'unit' generally refers to a physical or logical entity, such as a physical device or a part thereof or a software routine. The monitoring arrangement 21 or other means for implementing at least part of the functionality according to any one of the embodiments herein may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the various embodiments, or a part thereof, may further comprise suitable input means for receiving e.g. measurement and/or control data, and output means for outputting e.g. control or any other data, such as the determined thermal load. It is also possible to use a specific integrated circuit or circuits, such as application-specific integrated circuits (ASIC), digital signal processing devices (DSPD), programmable logic devices (PLD), field-programmable gate arrays (FPGA) and/or discrete electric components and devices for implementing the functionality according to any one of the embodiments.

Many electric devices, such as electric power systems, and components thereof may comprise processors and memory that may be utilized in implementing the functionality according to the various embodiments described herein. Thus, at least some modifications and configurations possibly required for implementing an embodiment could be performed as software routines, which may be implemented as added or updated software routines. If at least part of the functionality of any of the embodiments is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing any of the embodiments may be loaded to the unit or units executing the computer program code via a suitable data network, for example, and it may replace or update a possibly existing program code. An embodiment may provide a computer program embodied on any client-readable distribution/data storage medium or memory unit(s) or article(s) of manufacture, comprising program instructions executable by one or more processors/computers, which instructions, when loaded into an apparatus, constitute the monitoring arrangement, or any corresponding unit or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the possible units/sub-units and/or algorithms for one or more functions/operations described above, for example by means of any of Figures 1 to 3 and any combination thereof, may be an element that comprises one or more arithmetic logic units, a number of special registers and control circuits.

It will be obvious to a person skilled in the art that, as the technology advances, the inventive concept can be implemented in various ways. The invention and its embodiments are not limited to the examples described above but may vary within the scope of the claims.

**Claims**

1. A computer implemented method for monitoring a thermal load in an enclosure comprising at least one electric device, the method comprising:

    a) receiving (201) temperature data on a temperature inside the enclosure (11);
    b) receiving (201) data indicative of heat generated by the at least one electric device (12) into the enclosure (11), wherein the data indicative of the heat generated by the at least one electric device (12) into the enclosure (11) comprises data on a power loss or an estimated power loss of the at least one electric device (12) and/or data on an energy loss or an estimated energy loss of the at least one electric device (12);
    c) associating and recording (202) the data indicative of the heat generated by the at least one electric device (12) into the enclosure (11) with the temperature data over at least one period of time; and
    d) determining (203) a thermal load caused by the at least one electric device (12) in the enclosure (11) on the basis of the data recorded over said at least one period of time, wherein step d) comprises:

        determining, in response to a determined temperature difference over said at least one period of time inside the enclosure (11) being essentially zero and a determined variation of the power loss or the estimated power loss of the at least one electric device (12) during said at least one period of time being essentially zero, that a thermal equilibrium exists in the enclosure (11);
        determining, in response to the determined temperature difference over said at least one period of time inside the enclosure (11) being essentially zero and the determined variation of the power loss or the estimated power loss of the at least one electric device (12) during said at least one period of time being greater than zero, that the thermal load caused by the at least one electric device (12) in the enclosure (11) is not significant; and/or
        determining, in response to the determined temperature difference over said at least one period of time inside the enclosure (11) being greater than zero and a determined energy loss or an estimated energy loss of the at least one electric device (12) over said at least one period of time being greater than zero, that the at least one electric device (12) may have contributed to said temperature difference becoming greater than zero and that the thermal load caused by the at least one electric device (12) in the enclosure (11) is significant.

2. A computer implemented method as claimed in claim 1, wherein step d) comprises determining, on the basis of the data recorded over said at least one period of time, whether the heat generated by the at least one electric device (12) into the enclosure (11) caused a variation of the temperature.

3. A computer implemented method as claimed in claim 1 or 2, wherein step c) is performed for two or more periods of time occurring during one power cycle of the at least one electric device, wherein step d) is performed on the basis of the data recorded over said two or more periods of time.

4. A computer implemented method as claimed in any one of claims 1 to 3, further comprising in response to determining that the thermal load caused by the at least one electric device (12) in the enclosure (11) is significant controlling the at least one electric device (12) to reduce or prevent the thermal load caused by the at least one electric device (12) in the enclosure (11).

5. A computer program comprising program instructions which, when run by a computing apparatus, cause the computing apparatus to carry out a method according to any one of the preceding claims.

**6.** A computer readable medium comprising program instructions for causing a computing apparatus to carry out a method according to any preceding claim 1 to 4.

**7.** An apparatus for monitoring a thermal load in an enclosure comprising at least one electric device, the apparatus comprising:

means configured to receive temperature data on a temperature inside the enclosure (11);
means configured to receive data indicative of heat generated by the at least one electric device (12) into the enclosure (11), wherein the data indicative of the heat generated by the at least one electric device (12) into the enclosure (11) comprises data on a power loss or an estimated power loss of the at least one electric device (12) and/or data on an energy loss or an estimated energy loss of the at least one electric device (12);
means configured to associate and record the data indicative of the heat generated by the at least one electric device (12) into the enclosure (11) with the temperature data over at least one period of time; and
means configured to determine a thermal load caused by the at least one electric device (12) in the enclosure (11) on the basis of the data recorded over said at least one period of time, wherein the means configured to determine the thermal load are configured to:

determine, in response to a determined temperature difference over said at least one period of time inside the enclosure (11) being essentially zero and a determined variation of the power loss or estimated power loss of the at least one electric device (12) during said at least one period of time being essentially zero, that a thermal equilibrium exists in the enclosure (11);
determine, in response to the determined temperature difference over said at least one period of time inside the enclosure (11) being essentially zero and the determined variation of the power loss or estimated power loss of the at least one electric device (12) during said at least one period of time being greater than zero, that the thermal load caused by the at least one electric device (12) in the enclosure (11) is not significant; and/or
determine, in response to the determined temperature difference over said at least one period of time inside the enclosure (11) being greater than zero and the determined energy loss or the estimated energy loss of the at least one electric device (12) over said at least one period of time being greater than zero, that the at least one electric device (12) may have contributed to said temperature difference becoming greater than zero and that the thermal load caused by the at least one electric device (12) in the enclosure (11) is significant.

**8.** An apparatus according to claim 7, further comprising means configured to carry out a method according to any one of claims 2 to 4.

**9.** A system comprising:

an enclosure (11);
at least one electric device (12) located within the enclosure (11); and
at least one apparatus configured to perform a method according to any one of claims 1 to 4.

**10.** A system as claimed in claim 9, the system further comprising one or more temperature sensors configured to measure temperature inside the enclosure (11) and to send the temperature data to the at least one apparatus.

**11.** A system according to claim 9 or 10, wherein the at least one electric device (12) is configured to send to the at least one apparatus temperature data on the temperature inside the enclosure (11) and/or data indicative of heat generated by the at least one electric device (12).

**12.** A system according to claim 9, 10 or 11, wherein the at least one electric device (12) comprises at least one electric drive.

**Patentansprüche**

**1.** Computerimplementiertes Verfahren zum Überwachen einer thermischen Belastung in einem Gehäuse, das mindestens eine elektrische Einrichtung umfasst, wobei das Verfahren Folgendes umfasst:

a) Empfangen (201) von Temperaturdaten über eine Temperatur im Inneren des Gehäuses (11);
b) Empfangen (201) von Daten, die eine von der mindestens einen elektrischen Einrichtung (12) in dem Gehäuse (11) erzeugte Wärme anzeigen, wobei die Daten, die die von der mindestens einen elektrischen Einrichtung (12) in dem Gehäuse (11) erzeugte Wärme anzeigen, Daten über einen Leistungsverlust oder einen geschätzten Leistungsverlust der mindestens einen elektrischen Einrichtung (12) und/oder Daten über einen Energieverlust oder einen geschätzten Energieverlust der mindestens einen elektrischen Einrichtung (12) umfassen;

c) Assoziieren und Aufzeichnen (202) der Daten, die die von der mindestens einen elektrischen Einrichtung (12) in dem Gehäuse (11) erzeugte Wärme anzeigen, mit den Temperaturdaten über mindestens einen Zeitraum; und

d) Bestimmen (203) einer thermischen Belastung, die von der mindestens einen elektrischen Einrichtung (12) in dem Gehäuse (11) verursacht wird, basierend auf den über den mindestens einen Zeitraum aufgezeichneten Daten, wobei Schritt d) Folgendes umfasst:

Bestimmen, als Reaktion darauf, dass eine bestimmte Temperaturdifferenz über den mindestens einen Zeitraum im Inneren des Gehäuses (11) im Wesentlichen null ist und eine bestimmte Schwankung des Leistungsverlusts oder des geschätzten Leistungsverlusts der mindestens einen elektrischen Einrichtung (12) während des mindestens einen Zeitraums im Wesentlichen null ist, dass ein thermisches Gleichgewicht in dem Gehäuse (11) vorhanden ist;

Bestimmen, als Reaktion darauf, dass die bestimmte Temperaturdifferenz über den mindestens einen Zeitraum im Inneren des Gehäuses (11) im Wesentlichen null ist und die bestimmte Schwankung des Leistungsverlusts oder des geschätzten Leistungsverlusts der mindestens einen elektrischen Einrichtung (12) während des mindestens einen Zeitraums größer als null ist, dass die thermische Belastung, die von der mindestens einen elektrischen Einrichtung (12) in dem Gehäuse (11) verursacht wird, nicht signifikant ist; und/oder

Bestimmen, als Reaktion darauf, dass die bestimmte Temperaturdifferenz über den mindestens einen Zeitraum im Inneren des Gehäuses (11) größer als Null ist und ein bestimmter Energieverlust oder ein geschätzter Energieverlust der mindestens einen elektrischen Einrichtung (12) über den mindestens einen Zeitraum größer als Null ist, dass die mindestens eine elektrische Einrichtung (12) möglicherweise dazu beigetragen hat, dass die Temperaturdifferenz größer als Null wurde, und dass die thermische Belastung, die von der mindestens einen elektrischen Einrichtung (12) in dem Gehäuse (11) verursacht wird, signifikant ist.

2. Computerimplementiertes Verfahren nach Anspruch 1, wobei Schritt d) Bestimmen, basierend auf den über den mindestens einen Zeitraum aufgezeichneten Daten, ob die von der mindestens einen elektrischen Einrichtung (12) in dem Gehäuse (11) erzeugte Wärme eine Schwankung der Temperatur verursacht hat.

3. Computerimplementiertes Verfahren nach Anspruch 1 oder 2, wobei Schritt c) für zwei oder mehr Zeiträume durchgeführt wird, die während eines Leistungszyklus der mindestens einen elektrischen Einrichtung stattfinden, wobei Schritt d) basierend auf den über die zwei oder mehr Zeiträume aufgezeichneten Daten durchgeführt wird.

4. Computerimplementiertes Verfahren nach einem der Ansprüche 1 bis 3, ferner umfassend, als Reaktion auf ein Bestimmen, dass die thermische Belastung, die von der mindestens einen elektrischen Einrichtung (12) in dem Gehäuse (11) verursacht wird, signifikant ist, Steuern der mindestens einen elektrischen Einrichtung (12), um die thermische Belastung, die von der mindestens einen elektrischen Einrichtung (12) in dem Gehäuse (11) verursacht wird, zu reduzieren oder zu verhindern.

5. Computerprogramm, das Programmanweisungen umfasst, die dann, wenn sie durch eine Rechenvorrichtung ausgeführt werden, bewirken, dass die Rechenvorrichtung ein Verfahren nach einem der vorhergehenden Ansprüche ausführt.

6. Computerlesbares Medium, das Programmanweisungen zum Bewirken, dass eine Rechenvorrichtung ein Verfahren nach einem der vorhergehenden Ansprüche 1 bis 4 ausführt, umfasst.

7. Vorrichtung zum Überwachen einer thermischen Belastung in einem Gehäuse, das mindestens eine elektrische Einrichtung umfasst, wobei die Vorrichtung Folgendes umfasst:

Mittel, die zum Empfangen von Temperaturdaten über eine Temperatur im Inneren des Gehäuses (11) konfiguriert sind;

Mittel, die zum Empfangen von Daten konfiguriert sind, die eine von der mindestens einen elektrischen Einrichtung (12) in dem Gehäuse (11) erzeugte Wärme anzeigen, wobei die Daten, die die von der mindestens einen elektrischen Einrichtung (12) in dem Gehäuse (11) erzeugte Wärme anzeigen, Daten über einen Leistungsverlust oder einen geschätzten Leistungsverlust der mindestens einen elektrischen Einrichtung (12) und/oder Daten über einen Energieverlust oder einen geschätzten Energieverlust der mindestens einen elektrischen Einrichtung (12) umfassen;

Mittel, die zum Assoziieren und Aufzeichnen der Daten, die die von der mindestens einen elektrischen Einrichtung (12) in dem Gehäuse (11) erzeugte Wärme anzeigen, mit den Temperaturdaten über mindestens einen Zeitraum konfiguriert sind; und

Mittel, die zum Bestimmen einer thermischen Belastung, die von der mindestens einen elektrischen Einrichtung (12) in dem Gehäuse (11) verursacht wird, basierend auf den über den mindestens einen Zeitraum aufgezeichneten Daten konfiguriert sind, wobei die Mittel, die zum Bestimmen der thermischen Belastung konfiguriert sind,

zu Folgendem konfiguriert sind:

Bestimmen, als Reaktion darauf, dass eine bestimmte Temperaturdifferenz über den mindestens einen Zeitraum im Inneren des Gehäuses (11) im Wesentlichen null ist und eine bestimmte Schwankung des Leistungsverlusts oder geschätzten Leistungsverlusts der mindestens einen elektrischen Einrichtung (12) während des mindestens einen Zeitraums im Wesentlichen null ist, dass ein thermisches Gleichgewicht in dem Gehäuse (11) vorhanden ist;

Bestimmen, als Reaktion darauf, dass die bestimmte Temperaturdifferenz über den mindestens einen Zeitraum im Inneren des Gehäuses (11) im Wesentlichen null ist und die bestimmte Schwankung des Leistungsverlusts oder des geschätzten Leistungsverlusts der mindestens einen elektrischen Einrichtung (12) während des mindestens einen Zeitraums größer als null ist, dass die thermische Belastung, die von der mindestens einen elektrischen Einrichtung (12) in dem Gehäuse (11) verursacht wird, nicht signifikant ist; und/oder

Bestimmen, als Reaktion darauf, dass die bestimmte Temperaturdifferenz über den mindestens einen Zeitraum im Inneren des Gehäuses (11) größer als Null ist und der bestimmte Energieverlust oder der geschätzte Energieverlust der mindestens einen elektrischen Einrichtung (12) über den mindestens einen Zeitraum größer als Null ist, dass die mindestens eine elektrische Einrichtung (12) möglicherweise dazu beigetragen hat, dass die Temperaturdifferenz größer als Null wurde, und dass die thermische Belastung, die von der mindestens einen elektrischen Einrichtung (12) in dem Gehäuse (11) verursacht wird, signifikant ist.

8. Vorrichtung nach Anspruch 7, ferner umfassend Mittel, die zum Ausführen eines Verfahrens nach einem der Ansprüche 2 bis 4 konfiguriert sind.

9. System, das Folgendes umfasst:

ein Gehäuse (11);
mindestens eine elektrische Einrichtung (12), die im Gehäuse (11) angeordnet ist; und
mindestens eine Vorrichtung, die zum Durchführen eines Verfahrens nach einem der Ansprüche 1 bis 4 konfiguriert ist.

10. System nach Anspruch 9, wobei das System ferner einen oder mehrere Temperatursensoren umfasst, die zum Messen einer Temperatur im Inneren des Gehäuses (11) und zum Senden der Temperaturdaten an die mindestens eine Vorrichtung konfiguriert sind.

11. System nach Anspruch 9 oder 10, wobei die mindestens eine elektrische Einrichtung (12) zum Senden, an die mindestens eine Vorrichtung, von Temperaturdaten über die Temperatur im Inneren des Gehäuses (11) und/oder Daten, die eine von der mindestens einen elektrischen Einrichtung (12) erzeugte Wärme anzeigen, konfiguriert ist.

12. System nach Anspruch 9, 10 oder 11, wobei die mindestens eine elektrische Einrichtung (12) mindestens einen elektrischen Antrieb umfasst.

## Revendications

1. Procédé mis en œuvre par ordinateur pour surveiller une charge thermique dans une enceinte comprenant au moins un dispositif électrique, ce procédé comprenant :

a) la réception (201) de données de température sur une température à l'intérieur de l'enceinte (11) ;
b) la réception (201) de données indiquant la chaleur produite par l'au moins un dispositif électrique (12) dans l'enceinte (11), ces données indiquant la chaleur produite par l'au moins un dispositif électrique (12) dans l'enceinte (11) comprenant des données sur une perte de puissance ou sur une perte de puissance estimée de l'au moins un dispositif électrique (12) et/ou des données sur une perte d'énergie ou sur une perte d'énergie estimée de l'au moins un dispositif électrique (12) ;
c) l'association et l'enregistrement (202) des données indiquant la chaleur produite par l'au moins un dispositif électrique (12) dans l'enceinte (11) avec les données de température pendant au moins une période de temps ; et
d) la détermination (203) d'une charge thermique causée par l'au moins un dispositif électrique (12) dans l'enceinte (11) en se basant sur les données enregistrées pendant ladite au moins une période de temps, cette étape d) comprenant :

la détermination, en réponse à une différence de température déterminée pendant ladite au moins une période de temps à l'intérieur de l'enceinte (11) étant essentiellement nulle et à une variation déterminée de la perte de puissance ou de la perte de puissance estimée de l'au moins un dispositif électrique (12) pendant ladite au moins une période de temps étant essentiellement nulle, qu'il existe un équilibre thermique dans l'enceinte (11) ;

la détermination, en réponse à la différence de température déterminée pendant ladite au moins une période de temps à l'intérieur de l'enceinte (11) étant essentiellement nulle et à la variation déterminée de la perte de puissance ou de la perte de puissance estimée de l'au moins un dispositif électrique (12) pendant l'au moins une période de temps étant plus grande que zéro, que la charge thermique causée par l'au moins un dispositif électrique (12) dans l'enceinte (11) n'est pas importante ; et/ou

la détermination, en réponse à la différence de température déterminée pendant ladite au moins une période de temps à l'intérieur de l'enceinte (11) étant plus grande que zéro et à une perte d'énergie déterminée ou une perte d'énergie estimée de l'au moins un dispositif électrique (12) pendant ladite au moins une période de temps étant plus grande que zéro, que l'au moins un dispositif électrique (12) peut avoir contribué à ce que ladite différence de température devienne plus grande que zéro et à ce que la charge thermique causée par l'au moins un dispositif électrique (12) dans l'enceinte (11) soit importante.

2. Procédé mis en oeuvre par ordinateur selon la revendication 1, dans lequel l'étape d) comprend la détermination, en se basant sur les données enregistrées pendant ladite au moins une période de temps, de si la chaleur produite par l'au moins un dispositif électrique (12) dans l'enceinte (11) a entraîné ou pas une variation de la température.

3. Procédé mis en oeuvre par ordinateur selon la revendication 1, ou 2, dans lequel l'étape c) est exécutée pendant deux périodes de temps ou plus se produisant pendant un cycle d'énergie de l'au moins un dispositif électrique, l'étape d) étant exécutée en se basant sur les données enregistrées pendant lesdites deux périodes de temps ou plus.

4. Procédé mis en oeuvre par ordinateur selon l'une quelconque des revendications 1 à 3, comprenant en outre, en réponse à la détermination que la charge thermique causée par l'au moins un dispositif électrique (12) dans l'enceinte (11) est importante, la commande de l'au moins un dispositif électrique (12) afin de réduire ou d'empêcher la charge thermique causée par l'au moins un dispositif électrique (12) dans l'enceinte (11).

5. Programme informatique comprenant des instructions de programme qui, lorsqu'elles sont exécutées par un appareil informatique, font réaliser à cet appareil informatique un procédé selon l'une quelconque des revendications précédentes.

6. Support lisible par ordinateur comprenant des instructions de programme pour amener un appareil informatique à réaliser un procédé selon l'une quelconque des revendications 1 à 4.

7. Appareil pour surveiller une charge thermique dans une enceinte comprenant au moins un dispositif électrique, cet appareil comprenant :

un moyen configuré pour recevoir des données de température sur une température à l'intérieur de l'enceinte (11) ;

un moyen configuré pour recevoir des données indiquant la chaleur produite par l'au moins un dispositif électrique (12) dans l'enceinte (11), ces données indiquant la chaleur produite par l'au moins un dispositif électrique (12) dans l'enceinte (11) comprenant des données sur une perte de puissance ou sur une perte de puissance estimée de l'au moins un dispositif électrique (12) et/ou des données sur une perte d'énergie ou sur une perte d'énergie estimée de l'au moins un dispositif électrique (12) ;

un moyen pour associer et enregistrer les données indiquant la chaleur produite par l'au moins un dispositif électrique (12) dans l'enceinte (11) avec les données de température pendant au moins une période de temps ; et

un moyen configuré pour déterminer une charge thermique causée par l'au moins un dispositif électrique (12) dans l'enceinte (11) en se basant sur les données enregistrées pendant ladite au moins une période de temps, ce moyen configuré pour déterminer la charge thermique étant configuré pour :

déterminer, en réponse à une différence de température déterminée pendant ladite au moins une période de temps à l'intérieur de l'enceinte (11) étant essentiellement nulle et à une variation déterminée de la perte de puissance ou de la perte de puissance estimée de l'au moins un dispositif électrique (12) pendant ladite au moins une période de temps étant essentiellement nulle, qu'il existe un équilibre thermique dans l'enceinte (11) ;

déterminer, en réponse à la différence de température déterminée pendant ladite au moins une période de temps à l'intérieur de l'enceinte (11) étant essentiellement nulle et à la variation déterminée de la perte de puissance ou de la perte de puissance estimée de de l'au moins un dispositif électrique (12) pendant ladite au moins une période de temps étant plus grande que zéro, que la charge thermique causée par l'au moins un dispositif électrique (12) dans l'enceinte (11) n'est pas importante ; et/ou

déterminer, en réponse à la différence de température déterminée pendant ladite au moins une période de temps à l'intérieur de l'enceinte (11) étant plus grande que zéro et à la perte d'énergie déterminée ou la perte d'énergie estimée de l'au moins un dispositif électrique (12) pendant ladite au moins une période de temps étant plus grande que zéro, que l'au moins un dispositif électrique (12) peut avoir contribué à ce que ladite différence de température devienne plus grande que zéro et à ce que la charge thermique causée par l'au moins un dispositif électrique (12) dans l'enceinte (11) soit importante.

8. Appareil selon la revendication 7, comprenant en outre un moyen configuré pour réaliser un procédé selon l'une quelconque des revendications 2 à 4.

9. Système comprenant :

une enceinte (11) ;
au moins un dispositif électrique (12) situé au sein de l'enceinte (11) ; et
au moins un appareil configuré pour réaliser un procédé selon l'une quelconque des revendications 1 à 4.

10. Système selon la revendication 9, ce système comprenant en outre un ou plusieurs capteurs de température configurés pour mesurer la température à l'intérieur de l'enceinte (11) et pour envoyer les données de température à l'au moins un appareil.

11. Système selon la revendication 9 ou 10, dans lequel l'au moins un dispositif électrique (12) est configuré pour envoyer à l'au moins un appareil des données de température sur la température à l'intérieur de l'enceinte (11) et/ou des données indiquant la chaleur produite par l'au moins un dispositif électrique (12).

12. Système selon la revendication 9, 10 ou 11, dans lequel l'au moins un dispositif électrique (12) comprend au moins un entraînement électrique.

Fig. 1

Fig. 2

| Receive temperature data and data indicative of heat | 201 |
|---|---|
| Associate and record the data | 202 |
| Determine a thermal load | 203 |

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021012887 A1